# FASCICULE DE BREVET EUROPEEN

(11) **EP 0 903 909 B1**
(45) Date de publication et mention de la délivrance du brevet: **03.05.2006**
(21) Numéro de dépôt: 98202988.6
(22) Date de dépôt: 07.09.1998
(51) Int. Cl.: H04M 1/02

(54) **Téléphone mobile à écoute amplifiée**
Mobilfon mit Lauthöreinrichtung
Mobile telephone with a loudspeaker

(30) Priorité: 17.09.1997 FR 9711582
(43) Date de publication de la demande: 24.03.1999
(73) Titulaire: Koninklijke Philips Electronics N.V., 5621 BA Eindhoven (NL)
(72) Inventeur: Collin, Pascal, Société Civile S.P.I.D., 75008 Paris (FR)
(74) Mandataire: van Oudheusden-Perset, Laure E.

(56) Documents cités:
- US-A- 4 647 722
- US-A- 5 655 018
- PATENT ABSTRACTS OF JAPAN vol. 095, no. 004, 31 mai 1995 & JP 07 030991 A (FUJITSU LTD), 31 janvier 1995

## Description

La présente invention concerne un téléphone mobile, comportant une face avant munie d'un écouteur et d'un microphone et comportant un haut-parleur pour écoute amplifiée, et une face arrière.

Les téléphones, mobiles et sans fil, dits encore portables, sont munis d'un écouteur.

Une tendance actuelle est d'introduire sur ces appareils, aussi un haut-parleur, ce qui permet une écoute amplifiée et donc une utilisation dite mains-libres, ce qui est particulièrement utile dans une voiture notamment.

Ce haut-parleur additionnel peut alors, aussi, être utilisé pour réaliser la fonction de sonnerie d'appel.

Etant donné qu'un haut-parleur même miniaturisé a un diamètre de 3 à 3.5 cm, il n'est pas possible de le placer sur une face latérale du téléphone portable et on est amené à le placer sur l'une des faces principales.

Tout haut-parleur mobile réalisant une fonction d'écoute amplifiée ou de mains-libres sur un combiné téléphonique portable peut endommager de façon irréversible l'oreille de l'utilisateur.

En effet, rien ne permet de s'assurer que l'utilisateur ne portera pas directement la sortie acoustique du baffle à l'une de ses oreilles et ceci, soit d'une manière délibérée (un enfant notamment), soit par inattention.

Des solutions au problème précité ont été imaginées, en relation avec l'emplacement du haut-parleur sur le combiné téléphonique mobile.

Une première solution consisterait à placer le haut-parleur avec sa zone d'ouverture sonore sur une face latérale du téléphone portable, étant donné qu'il n'est pas naturel de porter le combiné à son oreille selon une direction perpendiculaire par rapport à la direction habituelle.

Cependant, cela poserait de gros problèmes de miniaturisation du haut-parleur comme déjà indiqué plus haut.

Le haut-parleur peut être confondu avec l'écouteur, cas dans lequel la même membrane réalise les deux fonctions d'écoute et d'écoute amplifiée.

Dans ce cas on peut prévoir, pour éviter tout choc acoustique, de placer à proximité immédiate du haut-parleur un capteur détecteur de rayonnement infrarouge pour reconnaître la proximité de l'oreille notamment et pour inhiber en conséquence la fonction haut-parleur.

Encore une autre solution consiste, pour certains combinés de sans fil à placer le haut-parleur à la face arrière du combiné et, pour éviter le contact de la sortie du haut-parleur avec l'oreille à le placer à l'endroit où c'est la paume de la main qui est normalement au contact de l'appareil lorsqu'on saisit le combiné de la façon habituelle. Une telle disposition, qui a été choisie pour le téléphone sans fil selon la norme DECT de la société Philips supprime en grande partie le risque de choc acoustique par le haut-parleur, mais le contact de ce dernier avec l'oreille reste possible, cependant, même s'il n'est pas naturel de placer son oreille à un tel endroit, ce qui peut conduire à des niveaux de pression acoustique pouvant dépasser 40 dBPa(A), pour un haut parleur de 8 Ω, alors que le niveau maximal admissible est de 30 dBPa(A). D'autre part, l'emplacement du haut-parleur au milieu de la face arrière rend difficile une situation de communication selon laquelle une personne utilise de façon habituelle son combiné, avec l'écouteur contre son oreille, alors que par ailleurs l'écoute amplifiée a été mise en service pour permettre à l'entourage d'entendre l'intégralité du dialogue téléphonique.

Les brevets US5655018 et JP07030991 décrivent des dispositifs pour modifier les caractéristiques sonores d'un haut-parleur.

Un but de l'invention est de munir un téléphone mobile d'un haut-parleur pour écoute amplifiée qui supprime le risque de choc acoustique qui serait dû à un trop grand rapprochement de ce haut-parleur avec l'oreille d'un utilisateur.

Un autre but de l'invention est de munir un téléphone mobile d'un haut-parleur pour écoute amplifiée qui soit assez omnidirectionnel.

Ces buts sont atteints et les inconvénients de l'art antérieur sont atténués grâce au fait que le téléphone mobile indiqué au premier paragraphe est remarquable en ce que des ouvertures se situent dans les faces latérales au plus proche de la périphérie dudit haut-parleur. phoniquement isolante en transmission;

L'idée de base de l'invention consiste à espacer suffisamment les ouvertures qui laissent passer le son du haut-parleur à travers la paroi du combiné pour que lorsque l'oreille est au contact de cette paroi à proximité du haut-parleur, le conduit auditif ne puisse couvrir qu'une petite partie de ces ouvertures, typiquement le tiers ou une valeur moindre.

Un mode préféré de réalisation de l'invention est remarquable en ce que ladite zone d'ouverture du haut-parleur est constituée par au moins trois ouvertures espacées autour de la zone circulaire de fermeture. On est ainsi assuré qu'une ouverture au maximum peut se trouver juste devant le conduit auditif avec un niveau de pression acoustique maximal de 30 dBPa(A), pour un haut-parleur de 8 Ω, c'est-à-dire assez puissant.

En général la face avant regroupe toutes les parties actives du combiné qui la garnissent presque entièrement alors que la face arrière est libre en grande partie. De préférence le haut-parleur selon l'invention avec sa zone d'ouverture à plusieurs ouvertures espacées est situé à la face arrière du combiné, soit en son milieu, comme dans l'art connu, soit avantageusement en haut de la face arrière, place qui est laissée libre par la main lorsque le combiné est normalement utilisé. Dans cette position, il est situé en regard, c'est-à-dire dos à dos par rapport à l'écouteur qui est disposé en haut de la face avant.

Plusieurs variantes de l'invention sont possibles.

Les ouvertures du haut parleur peuvent se situer à proximité immédiate de la zone de fermeture, sensiblement dans le même plan que cette dernière. Ainsi, même si les ouvertures sont très rapprochées entre elles selon une circonférence par exemple, il est physiquement impossible que le conduit auditif puisse en recouvrir plus du tiers.

Selon une deuxième variante, les ouvertures se situent dans les parties de parois latérales du téléphone mobile les plus proches du haut-parleur, par exemple une (ou deux) ouverture(s) dans la paroi courte (paroi haute) et une (ou deux) ouverture(s) dans chacune des parois latérales proprement dites.

Une troisième variante qui est hybride des deux précédentes consiste à ménager les ouvertures à la jonction entre le plan de la face arrière et les parties de paroi latérales du téléphone mobile les plus proches du haut-parleur.

Pour les deuxième et troisième variantes pour lesquelles le rendement sonore selon l'axe du haut-parleur est diminué, on peut prévoir de renforcer la puissance de ce dernier, notamment en abaissant à 8 ohms sa résistance.

La description qui suit en regard des dessins annexés le tout donné à titre d'exemple non limitatif fera bien comprendre comment l'invention peut être réalisée.

La figure 1 représente vu de dos et sur le côté, à échelle réduite, un téléphone sans fil de l'art antérieur, muni d'un haut-parleur pour écoute amplifiée.

La figure 2 représente le niveau acoustique de sortie du haut-parleur pour le téléphone sans fil de la figure 1.

La figure 3 est une vue en perspective par sa face avant d'un téléphone mobile.

Les figures 4 et 5 représentent à l'échelle 1 en A vu de dos avec arrachement et en B vu en coupe un premier et un deuxième mode de réalisation de l'invention respectivement.

Les figures 6 et 7 représentent à l'échelle 1, avec arrachement un troisième mode de réalisation de l'invention.

La figure 8 représente le niveau acoustique de sortie du haut-parleur pour le troisième mode de réalisation de l'invention de la figure 6.

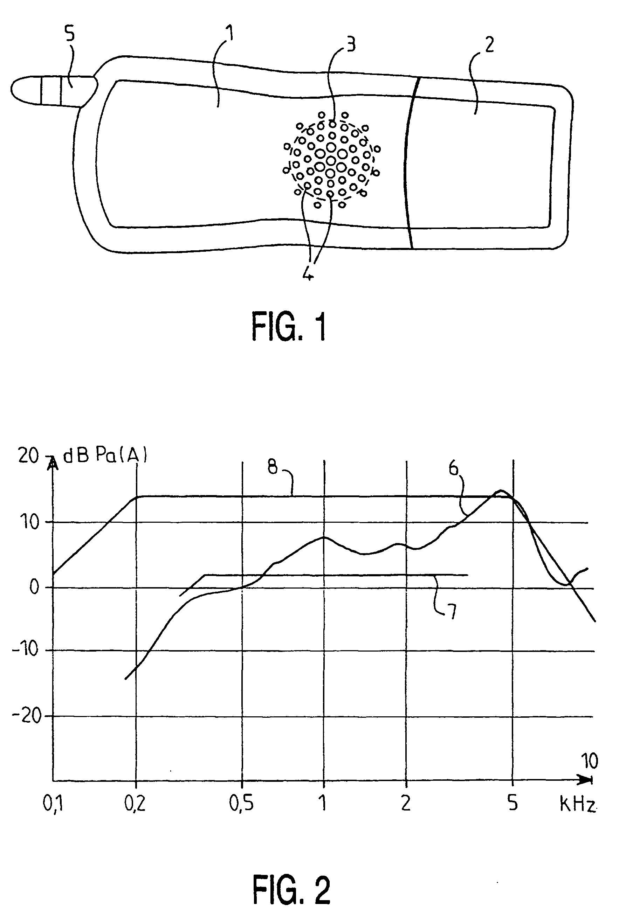

Le téléphone mobile de la figure 1, qui est ici un téléphone sans fil (cordless en anglais) comporte à sa face arrière 1 un couvercle 2 de batterie(s) et un haut-parleur pour écoute amplifiée représenté par un trait interrompu 3 sous-jacent à son ouverture située en regard et constituée par un certain nombre de trous 4 qui s'étendent avec un espacement régulier à l'intérieur et jusqu'au centre d'un cercle de diamètre légèrement supérieur à celui du haut-parleur. Ce téléphone comporte aussi une antenne émettrice-réceptrice 5. Le haut-parleur 3 est par exemple un haut-parleur du type WD02902/Y32L ou du type WDO2902/Y8L de la société Philips. Si l'on place une oreille artificielle du type IEC318 à 10 cm exactement en face du haut-parleur 3, on obtient, pour un haut-parleur de 32 Ω (le WD02902/Y32L de Philips), la courbe de réponse de la figure 2 qui exprime les niveaux acoustiques (en dBPa/(A)) en fonction des fréquences (en kHz). Cette courbe est sensiblement nominale et se situe bien entre deux gabarits inférieur, 7, et supérieur, 8, qui sont les gabarits normalisés pour les fréquences audio en téléphonie. Si maintenant la même oreille artificielle est appliquée contre la face arrière 1, toujours dans l'axe du haut-parleur 2 avec le haut parleur WD02902/Y8L, de 8 Ω, le niveau acoustique devient égal à 36 dBPa(A), ce qui ne serait pas admissible pour une oreille humaine pour laquelle le niveau maximal admissible est de 30 dBPa(A) (seuil de la douleur). On notera par ailleurs que l'échelle adoptée à la figure 1 est de 0,7 environ et que le diamètre réel de l'ouverture du haut-parleur (cercle contenant les trous 4) est de l'ordre de 4 cm environ, alors que celui de l'oreille artificielle, normalisé et qui correspond le mieux possible à celui de l'oreille humaine est de 25.4 mm. Ceci signifie que si les trous 4 étaient compris dans un cercle réduit à 25,4 mm, le niveau acoustique dépasserait largement 36 dBPa(A). Mesure faite, on trouve en effet, avec le haut-parleur précité de 8 Ω une valeur de 41 dBPa(A) encore moins supportable que la précédente.

Cependant, la position choisie au milieu de la face arrière garantit qu'un utilisateur ne porterait pas le haut-parleur 3 à son oreille par inadvertance en le confondant avec un écouteur car lors d'une préhension normale pour son utilisation, c'est la paume de la main de l'utilisateur qui recouvre le haut-parleur et les trous 4.

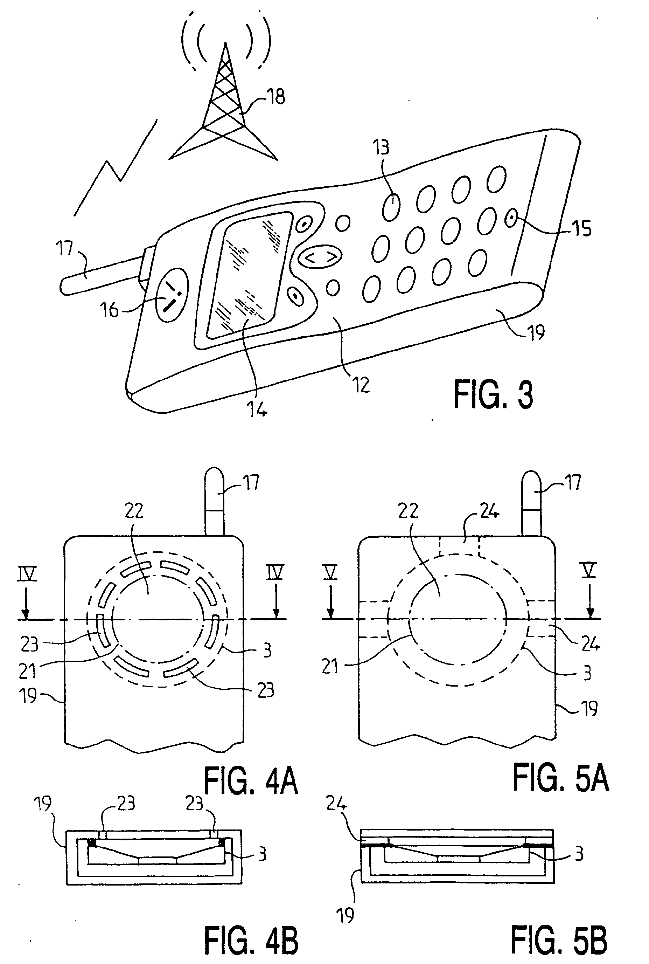

A la figure 3 on peut voir, par sa face avant 12, un récepteur de radio-communication, qui est ici un téléphone portable ou mobile. La face 12 comporte un clavier de touches 13, un écran 14 et, pour parler et entendre un interlocuteur lointain, un microphone 15 et un écouteur 16. Une antenne 17 permet de recevoir (ou d'émettre) des ondes radio à partir d'un (vers un) émetteur 18.

Si l'on souhaite munir d'un haut-parleur à écoute amplifiée le téléphone de la figure 3, on se rend compte qu'il est difficile, quoique toujours possible, de placer ce haut-parleur sur la face avant, déjà très occupée, à cause de la miniaturisation qui caractérise ce type de produit. De plus, il est quasi impossible de placer un tel haut-parleur en regard d'une face latérale comme 19, par manque d'épaisseur du combiné, toujours pour des raisons de miniaturisation. De préférence, le haut-parleur selon l'invention est placé, avec sa capsule, à la partie arrière haute du téléphone mobile comme représenté sur les figures 4 et 5. Dans cette position, le haut parleur 3 est placé dos à dos par rapport à l'écouteur disposé en haut de la face avant.

Sur les figures 4 et 5. aucune ouverture n'est présente, dans la paroi, à l'intérieur d'un cercle imaginaire 21 en trait mixte, concentrique au cercle du haut-parleur 3 et de diamètre supérieur à 25,4 mm, c'est-à-dire le diamètre d'une oreille artificielle ou humaine. La zone 22 située à l'intérieur du cercle 21 est ainsi appelée zone de fermeture du baffle du haut-parleur 3. En pratique, on prendra une tolérance et une zone de fermeture circulaire de 27 mm de diamètre.

Pour le mode de réalisation de la figure 4, les ouvertures de sortie du baffle du haut-parleur 3. référencées 23, se situent à proximité de la zone de fermeture 22, sensiblement dans le même plan, qui est celui de la face arrière. Si l'on place une oreille artificielle contre la paroi arrière, exactement sur la zone 22, dans les mêmes conditions que ci-dessus en référence à la figure 1. avec un haut-parleur de 8 Ω, on obtient un niveau de pression acoustique de 12dBPa(A) car une petite partie du son parvient tout de même à traverser la paroi. En déplaçant l'oreille à proximité de la zone 22, cette oreille pourra couvrir au maximum le tiers des ouvertures 23, ce qui conduit à un niveau de 30 dBPa(A), ce qui est fort mais encore admissible.

Le mode de réalisation de la figure 5 consiste à placer des ouvertures dans les parties de paroi latérales telles que 19, les plus proches du haut-parleur. En reprenant les mesures indiquées en référence à la figure 4, on obtient des résultats similaires, c'est-à-dire de l'ordre de 12 dB contre la zone 22 et de l'ordre de 30 dB contre chacune des ouvertures 24.

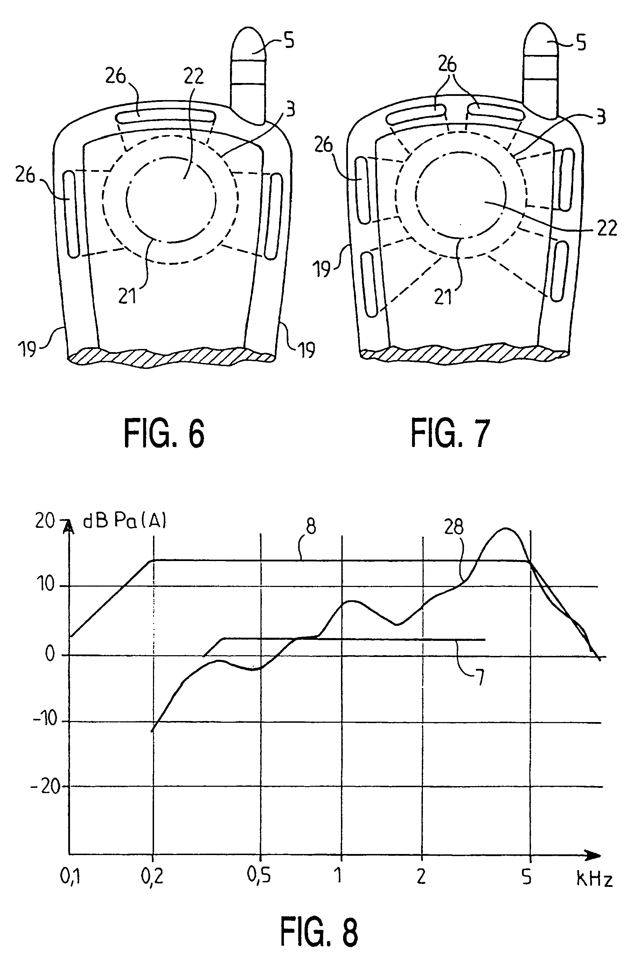

Un troisième mode de réalisation est représenté aux figures 6 et 7. Ce mode, hybride des deux précédemment décrits, consiste à placer les ouvertures du baffle du haut-parleur à la jonction entre le plan de la face arrière et les parties de parois latérales du téléphone, telles que 19, les plus proches du haut-parleur. Ces ouvertures sont référencées 26 sur les figures 6 et 7.

Pour les modes de réalisation des figures 5, 6 et 7 on obtient un haut-parleur à écoute amplifiée assez omnidirectionnel. En revanche, on perd en niveau sonore en direction de l'axe du haut-parleur, environ des trois quarts par rapport au téléphone de la figure 1. Pour compenser cela il est avantageux d'utiliser un haut-parleur de 8 Ω, au lieu de 32 Ω, comme c'est le cas pour les mesures indiquées plus haut en référence aux figures 1 et 2, c'est-à-dire un haut-parleur de puissance environ quadruple. Dans les mêmes conditions de mesure que celles des figures 1 et 2, on obtient, avec une oreille artificielle IEC318 placée à 10 cm sur l'axe d'un haut-parleur de type WD02902/Y8L, dans le téléphone de la figure 6, la courbe 28 de la figure 8, courbe qui est sensiblement comprise entre les deux gabarits 7 et 8 et qui est assez semblable à la courbe 6 de la figure 2. Une telle puissance fournit un niveau de l'ordre 30dBPa(A) sur chacune des 3 ouvertures pour les téléphones des figures 5 et 6. Si l'on considère que ce niveau est encore critique, il est possible d'augmenter le nombre d'ouvertures, en les dédoublant par exemple, et en les espaçant suffisamment comme représenté à la figure 7 pour le troisième mode de réalisation.

L'invention permet donc d'équiper un téléphone mobile avec haut-parleur pour écoute amplifiée, qui peut être utilisé en mains libres, dans une voiture, notamment ou tenu à la main dans sa position habituelle pour une utilisation normale avec microphone et écouteur, tout en fournissant un niveau sonore, pour la voix du correspondant lointain, au moins égal à celui d'une personne parlant normalement et ceci de façon assez omnidirectionnelle et sans risque de choc acoustique.

De préférence, la mise en service du haut-parleur pour écoute amplifiée se fait par appui sur une touche prévue à cet effet, sans couper le fonctionnement de l'écouteur du téléphone.

L'invention ne se limite pas aux modes de réalisation décrits ci-dessus. On peut prévoir notamment que, dans un proche avenir, on puisse confondre physiquement l'écouteur et la fonction d'amplification, si l'évolution des spécifications le permet. Auquel cas, les mesures prises selon l'invention pour l'agencement des ouvertures de sortie du haut-parleur se retrouveraient autour de l'écouteur, en haut de la face avant.

L'invention est applicable dès lors qu'un haut-parleur est présent sur un produit de télécommunication mobile. Elle peut éventuellement s'appliquer à une fonction d'appel (sonneries, mélodies, bips...) non destinée à une fonction d'amplification de la communication.

## Revendications

1. Téléphone mobile comportant :
- un boîtier muni de faces latérales (19) reliant une face avant et une face arrière,
- un haut-parleur (3) pour écoute amplifiée placé contre ladite face avant ou ladite face arrière,
**caractérisé en ce que** le téléphone mobile comprend en outre :
- des ouvertures (24) situées dans lesdites faces latérales (19) au plus proche de la périphérie dudit haut-parleur (3).

## Claims

1. A mobile telephone comprising:
- a box having side faces (19) connecting a front face with a back face,
- a loudspeaker (3) for amplified listening placed against said front face or said back face,
**characterized in that** the mobile telephone further has:
- openings (24) situated in said side faces (19) nearest the periphery of said loudspeaker (3).

## Patentansprüche

1. Mobilfon mit:
- Einem Gehäuse mit Seitenwänden (19) zur Verbindung einer Vorderseite und einer Rückseite,
- einem Lautsprecher (3) als Lauthöreinrichtung, gegen die besagte Vorderseite oder die besagte Rückseite angebracht,
**dadurch gekennzeichnet, dass** das Mobilfon außerdem umfasst:
- Öffnungen (24) in den besagten Seitenwänden (19), so nahe wie möglich am Umkreis des besagten Lautsprechers (3).
